# EUROPÄISCHE PATENTSCHRIFT

(11) **EP 3 406 474 B1**
(45) Veröffentlichungstag und Bekanntmachung des Hinweises auf die Patenterteilung: **15.06.2022**
(21) Anmeldenummer: 18172217.4
(22) Anmeldetag: 15.05.2018
(51) Int. Cl.: B60K 6/387, B60K 6/54, B60K 6/48, B60K 6/52, B60K 7/00

(54) **ELEKTROHYDRAULISCHE HYBRIDANTRIEBSVORRICHTUNG FÜR EIN KRAFTFAHRZEUG**
ELECTROHYDRAULIC HYBRID DRIVE DEVICE FOR A MOTOR VEHICLE
DISPOSITIF D'ENTRAÎNEMENT HYBRIDE ÉLECTRO-HYDRAULIQUE POUR UN VÉHICULE AUTOMOBILE

(30) Priorität: 23.05.2017 DE 102017111254
(43) Veröffentlichungstag der Anmeldung: 28.11.2018
(73) Patentinhaber: MAN Truck & Bus SE, 80995 München (DE)
(72) Erfinder: Fleischhacker, Jan, 82140 Olching (DE); Wagner, Philipp, 86316 Friedberg (DE)
(74) Vertreter: v. Bezold & Partner Patentanwälte - PartG mbB

(56) Entgegenhaltungen:
- EP-A1- 3 040 249
- WO-A1-2017/001017
- DE-A1-102011 006 087
- DE-A1-102013 102 036
- FR-A1- 3 008 650
- US-A1- 2016 176 406

## Beschreibung

Die Erfindung betrifft eine elektrohydraulische Hybridantriebsvorrichtung für ein Kraftfahrzeug, insbesondere für ein Nutzfahrzeug.

Aus der DE 10 2011 121 500 A1 ist ein hydraulisches Hybridantriebssystem für ein Kraftfahrzeug bekannt. Elektrohydraulische Hybridantriebssysteme sind aus der EP 1 824 699 B1 bekannt. Hierbei wird vorgeschlagen, eine Brennkraftmaschine betriebstechnisch mit einem Elektromotor/Generator zu koppeln, welcher wiederum betriebstechnisch mit einer ersten Hydraulikmaschine gekoppelt ist. Die erste Hydraulikmaschine steht in Fluidkommunikation mit einer zweiten Hydraulikmaschine, die mit den Antriebsrädern des Kraftfahrzeugs antriebstechnisch verbunden ist.

Das Dokument DE 10 2011 006 087 A1 beschreibt ein Fahrzeug mit einem Verbrennungsmotor, der zum Antreiben eines Antriebsstrangs vorgesehen ist, einer über eine erste Kupplung mit dem Verbrennungsmotor koppelbaren elektrischen Maschine und einer Antriebs-/Rekuperationshydraulik, die über eine zweite Kupplung mit der elektrischen Maschine Koppelbar ist und die über eine dritte Kupplung mit dem Antriebsstrang koppelbar ist.

Es ist eine Aufgabe der Erfindung, den bekannten Stand der Technik weiterzubilden. Die Aufgabe der Erfindung ist es insbesondere, eine Antriebsstrangkonfiguration bereitzustellen, mit denen unterschiedliche Betriebsarten des Kraftfahrzeugs flexibel und kraftstoffsparend realisiert werden können. Die Aufgabe der Erfindung ist es insbesondere, eine Antriebsstrangkonfiguration bereitzustellen, mit der unterschiedliche Fahrsituationen und Betriebsmodi des Fahrzeugs bei gutem Fahrverhalten realisiert werden können.

Diese Aufgaben werden durch eine elektrohydraulische Hybridantriebsvorrichtung für ein Kraftfahrzeug mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird eine Antriebsvorrichtung für ein Kraftfahrzeug, insbesondere eine elektrohydraulische Hybridantriebsvorrichtung, bereitgestellt. Das Kraftfahrzeug kann ein Nutzfahrzeug sein, insbesondere ein Nutzfahrzeug mit drei Achsen, z. B. einer Vorderachse und zwei Hinterachsen. Die zwei Hinterachsen können in Form eines Doppelachsaggregats ausgeführt sein.

Die Antriebsvorrichtung umfasst eine Brennkraftmaschine und eine generatorisch und motorisch betreibbare elektrische Maschine, nachfolgend als erste elektrische Maschine bezeichnet, die über einen Nebenabtrieb (engl. power take-off) von der Brennkraftmaschine antreibbar ist. Die erste elektrische Maschine ist somit betriebstechnisch mit dem Nebenabtrieb verbindbar. Die elektrohydraulische Hybridantriebsvorrichtung kann insbesondere eine schaltbare Kupplungseinrichtung umfassen, mittels derer die erste elektrische Maschine mit dem Nebenabtrieb verbindbar ist. Ferner kann ein elektrischer Energiespeicher vorgesehen sein, über den die erste elektrische Maschine mit elektrischer Energie versorgbar ist.

Die Antriebsvorrichtung umfasst ferner eine hydraulische Maschine, nachfolgend als erste hydraulische Maschine bezeichnet, die in Antriebsverbindung mit der ersten elektrischen Maschine steht. Die erste hydraulische Maschine ist somit betriebstechnisch mit der ersten elektrischen Maschine verbunden. Die erste elektrische Maschine und die erste hydraulische Maschine sind somit bewegungsgekoppelt, können z. B. auf einer gemeinsamen Antriebswelle sitzen und/oder über eine direkte Kupplung miteinander verbunden sein.

Die Antriebsvorrichtung umfasst ferner mindestens eine weitere hydraulische Maschine, nachfolgend als zweite hydraulische Maschine bezeichnet. Die mindestens eine zweite hydraulische Maschine steht mit der ersten hydraulischen Maschine in Fluidkommunikation und ist mit dieser antriebstechnisch in Reihe verbunden, wobei die erste und die zweite hydraulische Maschine sowohl als Hydraulikpumpen und Hydraulikmotoren betreibbar sind. Die erste und die mindestens eine zweite hydraulische Maschine sind Teil eines hydrostatischen Antriebs des Kraftfahrzeugs.

Bei dem Nebenabtrieb kann es sich um einen motorseitigen, d. h. direkt an der Brennkraftmaschine vorgesehenen Nebenabtrieb, oder einen getriebeseitigen Nebenabtrieb, d. h. einem am Getriebe angeordneten Nebenabtrieb, handeln.

Die Ankopplung des elektrohydraulischen Antriebs an die Brennkraftmaschine über den Nebenabtrieb bietet den Vorteil, dass die Brennkraftmaschine über den Hauptabtrieb direkt rein mechanisch eine Achse des Fahrzeugs antreiben kann und der elektrohydraulische Antrieb alternativ oder zusätzlich bei Bedarf zum Antrieb einer oder mehrerer weiterer Achsen zuschaltbar ist. Die elektrohydraulische Hybridantriebsvorrichtung umfasst somit eine erste angetriebene Achse des Kraftfahrzeugs, die über eine von der Brennkraftmaschine angetriebene getriebeausgangsseitige Abtriebswelle antreibbar ist. Hierbei ist die Brennkraftmaschine abtriebsseitig vorzugsweise mit einem mechanischen Getriebe, z. B. einem automatisierten Schaltgetriebe, verbunden, welches ausgangsseitig mit der Abtriebswelle gekoppelt ist. Die erste angetriebene Achse kann eine erste Hinterachse eines Nutzfahrzeugs sein. Der Begriff "angetriebene Achse" bedeutet in diesem Dokument, dass die Achse aktiv antreibbar ist.

Erfindungsgemäß ist vorgesehen, dass die elektrohydraulische Hybridantriebsvorrichtung mindestens eine zweite angetriebene Achse des Kraftfahrzeugs umfasst, die von der mindestens einen zweiten hydraulischen Maschine antreibbar ist. Das Kraftfahrzeug umfasst somit eine oder mehrere hydraulisch angetriebene Achsen, die hier jeweils als zweite angetriebene(n) Achse(n) bezeichnet wird/werden.

Beispielsweise kann die mindestens eine zweite angetriebene Achse eine Vorderachse und/oder eine zweite Hinterachse des Nutzfahrzeugs umfassen.

Die elektrohydraulische Hybridantriebsvorrichtung ist somit derart ausgeführt, dass bei Antrieb der ersten elektrischen Maschine über den Nebenabtrieb mittels der Brennkraftmaschine und/oder über ihren elektrischen Energiespeicher primärseitig die mechanische Leistung der ersten elektrischen Maschine durch die erste hydraulische Maschine als Hydropumpe (Arbeitsmaschine) in hydraulische Leistung umgewandelt wird. Diese Leistung wird in der mindestens einer zweiten hydraulischen Maschine als Hydromotor (Verbraucher bzw. Kraftmaschine) wieder in mechanische Leistung zum Antrieb der zweiten Achse umgeformt.

Die mechanische Leistung zum Antrieb der ersten hydraulischen Maschine als Hydropumpe kann wahlweise nur von der Brennkraftmaschine bereitgestellt werden (insbesondere dann, wenn die schaltbare Kupplungseinrichtung geschlossen ist und die erste elektrische Maschine von der Brennkraftmaschine angetrieben bzw. mitgeschleppt wird) oder nur von dem elektrischen Energiespeicher zur Versorgung der ersten elektrischen Maschine bereitgestellt werden (wenn die schaltbare Kupplungseinrichtung geöffnet ist und die erste elektrische Maschine aus dem elektrischen Energiespeicher versorgt wird) oder sowohl von der Brennkraftmaschine als auch dem elektrischen Energiespeicher der ersten elektrischen Maschine bereitgestellt werden.

Beim rekuperativen Bremsbetrieb kann die kinetische Energie des Fahrzeugs zumindest zum Teil über die mindestens eine zweite hydraulische Maschine als Hydropumpe in hydraulische Leistung umgewandelt werden. Diese Leistung wird in der ersten hydraulischen Maschine als Hydromotor in mechanische Leistung zum Antrieb der ersten elektrischen Maschine umgeformt. Bei geöffneter Kupplungseinrichtung kann dann die rekuperierte Energie dem Energiespeicher der ersten elektrischen Maschine zugeführt werden. Bei geschlossener Kupplungseinrichtung kann die rekuperierte Energie zum Schleppen der Brennkraftmaschine und damit für das Motorbremsen genutzt werden.

Die zweite hydraulische Maschine kann beispielsweise als an der Radnabe angeordnete hydraulische Maschine bzw. als Radnabenmotor ausgeführt sein. Eine zweite angetriebene Achse kann dann von zwei hydraulischen Maschinen in Form von Radnabenmotoren angetrieben sein, insbesondere ohne dass ein Achsdifferential an dieser Achse vonnöten ist. Bei dieser Variante können radindividuelle Drehmomente aufgebracht werden, bzw. ohne Differentialsperre kann ein Durchdrehen der Räder durch Ansteuerung der Radnabenmotoren verhindert werden oder ein sog. Torque Vectoring, d. h. die aktive Beeinflussung des Gierwinkels des Kraftfahrzeugs durch Steuerung der Drehmomentaufteilung, dargestellt werden.

Gemäß einer alternativen Ausführungsvariante weist die zweite angetriebene Achse zwei koaxial, d.h. in der selben Linie, angeordnete Radantriebswellen auf, die jeweils radseitig mit einem Rad drehfest verbunden sind und andernends mit einer hydraulischen Maschine wirkverbunden sind. Auch bei dieser Variante ist die zweite angetriebene Achse von zwei hydraulischen Maschinen antreibbar, die jedoch nicht direkt an der Radnabe angeordnet sind. Bei dieser Variante können ebenfalls radindividuelle Drehmomente ohne Achsdifferential aufgebracht werden.

Gemäß einer weiteren Ausführungsvariante ist eine zweite angetriebene Achse nur von einer hydraulischen Maschine antreibbar. Die zweite hydraulische Maschine kann beispielsweise als hydraulische Maschine ausgeführt sein, deren Antriebswelle mit einem Achsdifferential der zweiten angetriebenen Achse wirkverbunden ist.

Beispielsweise können die Vorderachse und/oder die zweite Hinterachse eines Nutzfahrzeugs jeweils durch eine der vorgenannten Ausführungsvarianten als eine derartige hydraulisch angetriebene Achse angetriebenen sein. Die vorgenannten Ausführungsvarianten können kombiniert werden, so dass eine hydraulisch angetriebene Achse, beispielsweise die Vorderachse, durch zwei hydraulische Radnabenmotoren antreibbar ist und eine weitere hydraulisch angetriebene Achse, beispielsweise die zweite Hinterachse des Kraftfahrzeugs, durch eine an der zweiten Hinterachse angeordnete hydraulische Maschine, die mit einem Achsdifferential der zweiten Hinterachse wirkverbunden ist, antreibbar ist.

Gemäß einem weiteren Aspekt der Erfindung kann die elektrohydraulische Hybridantriebsvorrichtung einen hydraulischen Nebenabtrieb zum Betrieb und/oder zur Druckölversorgung von hydraulischen Aufbauten oder hydraulischen Nebenaggregaten des Kraftfahrzeugs aufweisen, der in hydraulischer Antriebsverbindung mit der ersten hydraulischen Maschine steht. Dies bieten den Vorzug, dass derartige hydraulische Aufbauten oder hydraulische Nebenaggregate, z. B. Kippeinrichtungen, Betonmischtrommeln etc. auch in Phasen, in denen die Brennkraftmaschine nicht aktiv ist, über die erste elektrische Maschine mit Energie aus dem elektrischen Energiespeicher betrieben werden können, z. B. in Stopp-Phasen eines Stopp-Start-Betriebs des Kraftfahrzeugs. Ein weiterer Vorteil ist, dass bei geöffneter Kupplungseinrichtung die Nebenaggregate auch unabhängig von der Drehzahl und damit von Drehzahlschwankungen der Brennkraftmaschine betreibbar sind.

Erfindungsgemäß umfasst die elektrohydraulische Hybridantriebsvorrichtung mindestens eine generatorisch und motorisch betreibbare weitere elektrische Maschine, nachfolgend als zweite elektrische Maschine bezeichnet, die an einer dritten angetriebenen Achse des Nutzfahrzeugs angeordnet ist und in Antriebsverbindung mit der dritten Achse steht. Der Begriff "dritte angetriebene Achse" wird verwendet, um die Achse, die von der zweiten elektrischen Maschine antreibbar ist, von derjenigen angetriebenen Achse, die von direkt von der zweiten hydraulischen Maschine antreibbar ist, zu unterscheiden. Die dritte Achse kann z. B. ebenfalls eine Vorderachse oder eine zweite Hinterachse sein.

Beispielsweise sieht eine Ausführungsvariante vor, dass die zweite angetriebene Achse eine Vorderachse sein kann und die dritte angetriebene Achse eine zweite Hinterachse des Nutzfahrzeugs sein kann. Die erste angetriebene Achse, d. h. die mechanisch von der Brennkraftmaschine angetriebene Achse, kann eine erste Hinterachse des Kraftfahrzeugs sein. Besonders vorteilhaft ist hierbei, wenn die Vorderachse von zwei hydraulischen Radnabenmotoren antreibbar ist, da sich hier im Hinblick auf die Leistungsdichte der hydraulischen Motoren und den geringen benötigten Bauraum konstruktive Vorteile ergeben.

Unter der ersten Hinterachse wird die in Bezug auf eine Vorwärtsfahrtrichtung des Fahrzeugs vordere Achse der beiden Hinterachsen verstanden. Dementsprechend wird unter der zweiten Hinterachse die in Bezug auf die Vorwärtsfahrtrichtung hintere Achse der beiden Hinterachsen verstanden. Die erste und die zweite Hinterachse können die beiden Achsen eines Doppelachsaggregats des Nutzfahrzeugs sein.

Die erste elektrische Maschine und die zweite elektrische Maschine sind vorzugsweise mit dem gleichen elektrischen Energiespeicher gekoppelt, so dass sie vom gleichen elektrischen Energiespeicher mit elektrischer Energie versorgt werden können bzw. rekuperierte Energie dem gleichen Energiespeicher zuführen können.

Analog zu der hydraulisch angetriebenen zweiten Achse ergeben sich mehrere Ausführungsvarianten für die elektrisch angetriebene dritte Achse. Eine Ausführungsform sieht beispielsweise vor, dass eine Antriebswelle der zweiten elektrischen Maschine mit einem Achsdifferential der dritten angetriebenen Achse wirkverbunden ist. Alternativ können zwei zweite elektrischen Maschinen an der dritten Achse vorgesehen sein, wobei die dritte angetriebene Achse zwei koaxial angeordnete Radantriebswellen aufweist, die jeweils radseitig mit einem Rad drehfest verbunden sind und andernends mit einem der beiden zweiten elektrischen Maschinen wirkverbunden sind. Die zwei zweiten elektrischen Maschinen können auch als elektrische Radnabenmotoren ausgeführt sein.

Gemäß einer weiteren Ausführungsform umfasst die elektrohydraulische Hybridantriebsvorrichtung einen elektrischen Nebenabtrieb zum Betrieb und/oder zur Stromversorgung von elektrisch angetriebenen Aufbauten oder Nebenaggregaten des Kraftfahrzeugs, der über den elektrischen Energiespeicher zur Versorgung der ersten elektrischen Maschine mit elektrischer Energie versorgt werden können. Somit können auch hier die elektrisch angetriebenen Nebenaggregate bei Bedarf auch ohne die Brennkraftmaschine betrieben werden, indem die erste elektrische Maschine nicht über den Nebenabtrieb, sondern von ihrem elektrischen Energiespeicher mit Antriebsenergie versorgt wird.

Vorstehend wurde bereits festgestellt, dass die elektrohydraulische Hybridantriebsvorrichtung eine schaltbare Kupplungseinrichtung, mittels derer die erste elektrische Maschine mit dem Nebenabtrieb verbindbar ist, und einen elektrischen Energiespeicher, über den die erste elektrische Maschine mit elektrischer Energie versorgbar ist, aufweisen kann. Gemäß einem weiteren Aspekt der Erfindung kann die elektrohydraulische Hybridantriebsvorrichtung ferner eine Steuereinrichtung zur Ansteuerung der schaltbaren Kupplungseinrichtung, der Brennkraftmaschine, der ersten elektrischen Maschine und der hydraulischen Maschinen umfassen. Die Steuereinrichtung kann ausgebildet sein, ferner die zweiten elektrischen Maschinen, falls diese vorgesehen sind, anzusteuern.

Die Steuereinrichtung ist ausgebildet, das Kraftfahrzeug wahlweise in zumindest zwei, zumindest drei, zumindest vier, zumindest fünf, zumindest sechs oder in allen der folgenden Betriebsmodi zu betreiben:
- einem ersten Betriebsmodus, bei dem das Kraftfahrzeug rein verbrennungsmotorisch angetrieben wird,
- einem zweiten Betriebsmodus, bei dem nur die mindestens eine zweite hydraulisch angetriebene Achse angetrieben wird,
- einem dritten Betriebsmodus, bei dem nur die dritte angetriebene Achse durch die mindestens eine zweite elektrische Maschine angetrieben wird;
- einem vierten Betriebsmodus, bei dem nur die mindestens eine zweite hydraulisch angetriebene Achse hydraulisch angetrieben wird und die dritte angetriebene Achse durch die mindestens eine zweite elektrische Maschine elektrisch angetrieben wird;
- einem fünften Betriebsmodus, bei dem
   a) die erste Achse mechanisch von der Brennkraftmaschine angetrieben wird, und
   b1) die mindestens eine zweite Achse hydraulisch von der mindestens einen zweiten hydraulischen Maschine angetrieben wird, und/oder
   b2) die dritte Achse elektrisch von der mindestens einen zweiten elektrischen Maschine angetrieben wird;
- einem sechsten Betriebsmodus, bei dem die Steuereinrichtung ausgebildet ist, in einem rekuperativen Bremsbetrieb die erste Hydraulikmaschine als Hydraulikmotor und die mindestens eine zweite Hydraulikmaschine als Hydraulikpumpe zu betreiben, so dass die erste elektrische Maschine generatorisch von der ersten Hydraulikmaschine angetrieben wird. Hierbei ist die Steuereinrichtung ausgebildet, die Kupplungseinrichtung zu öffnen und die im rekuperativen Bremsbetrieb erzeugte elektrische Energie in dem elektrischen Energiespeicher zu speichern, insbesondere wenn der Speicher nicht voll ist;
- einem siebten Betriebsmodus, bei dem die Steuereinrichtung ausgebildet ist, in einem rekuperativen Bremsbetrieb die erste Hydraulikmaschine als Hydraulikmotor und die mindestens eine zweite Hydraulikmaschine als Hydraulikpumpe zu betreiben, so dass die erste elektrische Maschine generatorisch von der ersten Hydraulikmaschine angetrieben wird. Hierbei ist die Steuereinrichtung ausgebildet, die Kupplungseinrichtung zu schließen und die im rekuperativen Bremsbetrieb erzeugte elektrische Energie zum Schleppen der Brennkraftmaschine zu nutzen. Der siebte Betriebsmodus kann insbesondere dann ausgewählt werden, falls der Energiespeicher einen vorbestimmten Ladezustand überschritten hat und/oder voll ist und/oder eine zusätzliche Motorbremswirkung erforderlich ist.

Beispielsweise kann die Steuereinrichtung ausgebildet sein, für einen Anfahrvorgang, Rangiervorgang, Stopp-Start-Betrieb und/oder eine Kriechgangfunktion des Kraftfahrzeugs das Kraftfahrzeug in dem zweiten, dritten oder vierten Betriebsmodus zu betreiben. Gemäß diesen Betriebsmodi wird das Kraftfahrzeug elektrisch und/oder hydraulisch angetrieben. Die Brennkraftmaschine kann ausgeschaltet bleiben. Die mechanisch angetriebene Triebachse läuft passiv mit.

Gemäß einem weiteren Aspekt der Erfindung ist die Steuereinrichtung ausgebildet, im zweiten Betriebsmodus die Kupplungseinrichtung zu öffnen und das Kraftfahrzeug ohne Brennkraftmaschine anzutreiben, wobei die erste elektrische Maschine mittels Energie aus dem elektrischen Energiespeicher die erste hydraulische Maschine als Hydraulikpumpe antreibt und die Hydraulikpumpe die mindestens eine zweite hydraulische Maschine als Hydromotor antreibt. Die mechanisch angetriebene erste Achse läuft passiv mit.

Die Erfindung betrifft ferner ein Kraftfahrzeug, insbesondere ein Nutzfahrzeug, mit einer elektrohydraulischen Hybridantriebsvorrichtung, wie in diesem Dokument beschrieben und offenbart ist.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung einer elektrohydraulischen Hybridantriebsvorrichtung gemäß einer Ausführungsform;
- Figur 2: eine schematische Darstellung einer elektrohydraulischen Hybridantriebsvorrichtung gemäß einer weiteren Ausführungsform;
- Figur 3: eine schematische Darstellung einer elektrohydraulischen Hybridantriebsvorrichtung gemäß einer weiteren Ausführungsform; und
- Figur 4: eine schematische Darstellung einer elektrohydraulischen Hybridantriebsvorrichtung gemäß einer weiteren Ausführungsform.

Gleiche oder funktional äquivalente Elemente sind in allen Figuren mit denselben Bezugszeichen bezeichnet und zum Teil nicht gesondert beschrieben.

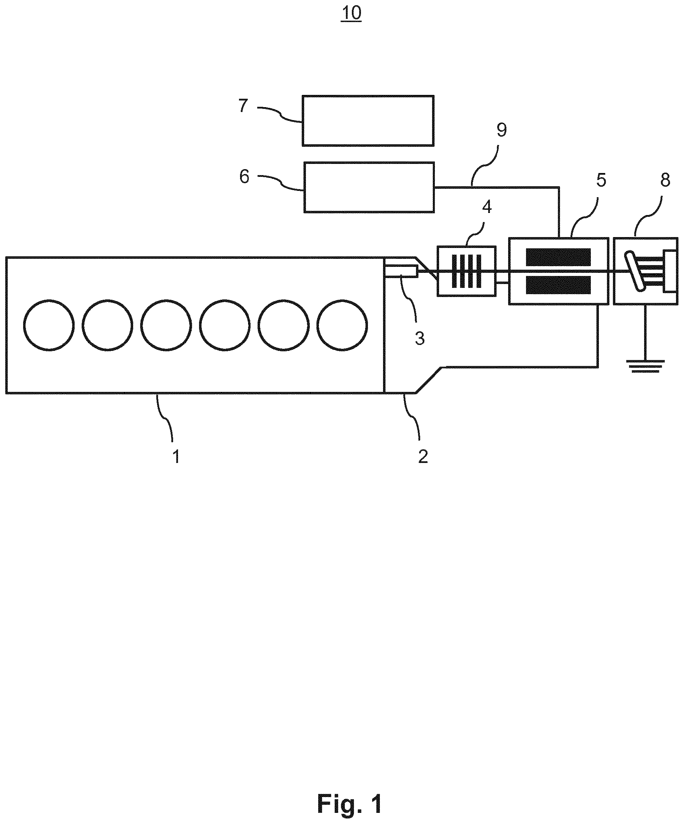

Figur 1 zeigt eine schematische Darstellung einer elektrohydraulischen Hybridantriebsvorrichtung für ein Nutzfahrzeug gemäß einer Ausführungsform. Die elektrohydraulische Hybridantriebsvorrichtung 10 umfasst eine Brennkraftmaschine 1, z. B. in Form eines Dieselmotors. Die Brennkraftmaschine 1 steht abtriebsseitig mit einem Getriebe 2 in Wirkverbindung. An einem Nebenabtrieb 3 der Brennkraftmaschine 1 ist über eine schaltbare Kupplung 4 eine elektrische Maschine 5 (erste elektrische Maschine) zuschaltbar. Bei geschlossener Kupplung 4 wird die erste elektrische Maschine 5 durch die Brennkraftmaschine 1, wenn diese läuft, über den Nebenabtrieb 3 angetrieben.

Die erste elektrische Maschine 5 ist über eine Stromleitung 9, z. B. ein Bordnetz, mit dem elektrischen Energiespeicher 6 verbunden. Bei geöffneter Kupplung 4 kann somit die erste elektrische Maschine 5 mit Energie aus dem elektrischen Energiespeicher 6 motorisch betrieben werden. Im generatorischen Betrieb der elektrischen Maschine 5 kann die erzeugte elektrische Energie im elektrischen Energiespeicher 6 gespeichert werden.

Die erste elektrische Maschine 5 ist ferner starr mit einer hydraulischen Maschine 8 (erste hydraulische Maschine) verbunden, d. h., die erste elektrische Maschine 5 und die erste hydraulische Maschine 8 stehen in Antriebsverbindung. Die hydraulische Maschine 8 kann sowohl als Hydraulikpumpe als auch als Hydraulikmotor betrieben werden. Bei Antrieb der ersten elektrischen Maschine 5 über den Nebenabtrieb 3 mittels der Brennkraftmaschine 1 (Kupplung 4 ist geschlossen) und/oder über ihren elektrischen Energiespeicher (Kupplung 4 kann geöffnet sein) wird primärseitig die mechanische Leistung der ersten elektrischen Maschine 5 durch die erste hydraulische Maschine 8 als Hydropumpe (Arbeitsmaschine) in hydraulische Leistung umgewandelt. Diese Leistung kann dann in einer weiteren hydraulischen Maschine als Hydromotor (Verbraucher bzw. Kraftmaschine) wieder in mechanische Leistung zum Antrieb einer Achse umgeformt werden (siehe nachfolgende Figuren).

Die elektrohydraulische Hybridantriebsvorrichtung 10 umfasst ferner eine Steuereinrichtung 7 zur Ansteuerung der schaltbaren Kupplungseinrichtung 4, der Brennkraftmaschine 1, der ersten elektrischen Maschine 5 und der hydraulischen Maschine 8, um unterschiedliche Fahrbetriebsmodi des Kraftfahrzeugs bzw. Betriebsmodi der Antriebsstrangkonfiguration (z. B. rein verbrennungsmotorischer Antrieb oder rein elektrohydraulischer Antrieb des Fahrzeugs) zu realisieren. Über die Steuereinrichtung 7 kann insbesondere die Kupplung 4 geöffnet und geschlossen werden.

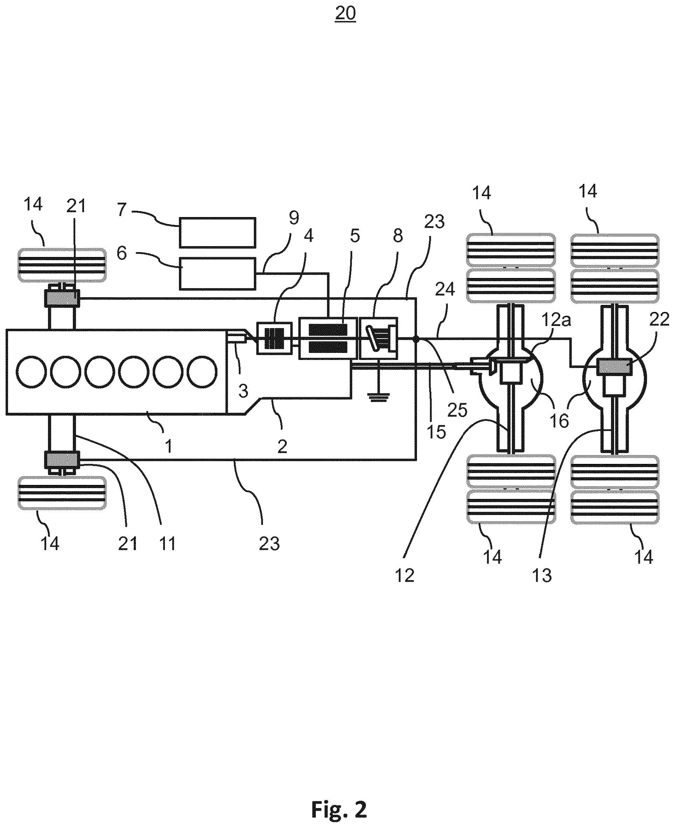

Figur 2 zeigt eine schematische Darstellung einer elektrohydraulischen Hybridantriebsvorrichtung gemäß einer weiteren Ausführungsform. Gezeigt sind hier wiederum die bereits in Figur 1 beschriebenen Komponenten 1 bis 9. Ferner ist eine Vorderachse 11 mit den beiden Rädern 14 gezeigt sowie eine erste Hinterachse 12 und eine zweite Hinterachse 13, jeweils mit Rädern 14. Die beiden Hinterachsen 12, 13 können die Achsen eines Doppelachsaggregats eines Nutzfahrzeugs sein.

Die erste (vordere) Hinterachse 12 wird rein mechanisch von der Brennkraftmaschine 1 angetrieben. Hierbei wird die Antriebsleistung der Brennkraftmaschine 1 über das Getriebe 2 und eine getriebeausgangsseitige Abtriebswelle 15 an die vordere Hinterachse 12 übertragen. Die Abtriebswelle 15 steht in an sich bekannter Weise mit einem in einem Achskörper 16 untergebrachten Achsdifferential 12a der vorderen Hinterachse 12 in Wirkverbindung. Beispielsweise kann das Achsdifferential 12a ein Kegelraddifferentialgetriebe sein, aufweisend ein Tellerrad, ein Paar Achskegelräder und ein Paar Ausgleichskegelräder, wobei die Achskegelräder mit den Ausgleichskegelrädern kämmen und wobei ein auf der Abtriebswelle 15 sitzendes Antriebsrad, z. B. ein Antriebskegelrad, mit dem Tellerrad des Achsdifferentials 12a in Eingriff steht. Beliebige andere Verzahnungen sind möglich, z. B. auch eine Hypoidverzahnung.

Die in Figur 2 gezeigte elektrohydraulische Hybridantriebsvorrichtung 20 umfasst ferner zwei hydraulisch angetriebene Achsen, nämlich die Vorderachse 11 und die zweite Hinterachse 13. Zum hydraulischen Antrieb der Vorderachse 11 sind zwei an der Vorderachse 11 angeordnete hydraulische Maschinen in Form von Radnabenmotoren 21 vorgesehen, die über die Hydraulikleitungen 23 mit der ersten hydraulischen Maschine 8 in Fluidkommunikation stehen und antriebstechnisch in Reihe verbunden sind.

Die elektrohydraulische Hybridantriebsvorrichtung 20 umfasst ferner eine an der zweiten Hinterachse 13 angeordnete hydraulische Maschine, nachfolgend auch als Hydraulikmotor 22 bezeichnet. Anstatt mittels zweier hydraulischer Radnabenmotoren ist die Achse hierbei durch lediglich einen hydraulischen Achsmotor 22 antreibbar. Beispielsweise kann der Hydraulikmotor 22 im Achsgehäuse 16 der zweiten Hinterachse 13 angeordnet sein bzw. in das Achsgehäuse integriert sein. Der Hydraulikmotor 22 ist somit nicht außen am Achsgehäuse, sondern innerhalb des Achsgehäuses angeordnet. Gemäß dieser Ausgestaltungsform ist ein koaxial zur zweiten Achse rotierbares Teil des Hydraulikmotors 22 mit einem Käfig eines Achsdifferentials der zweiten Achse wirkverbunden. Der Hydraulikmotor 22 treibt somit den Käfig des Achsdifferentials unmittelbar an und nicht mittelbar über ein Tellerrad. Auf ein Tellerrad und auf ein mit dem Tellerrad kämmendes Antriebskegelrad zum Antrieb des Käfigs des Achsdifferentials kann somit auf vorteilhafte Weise verzichtet werden. Der Hydraulikmotor kann auf der Welle des Achsdifferentials sitzen. Ein weiterer Vorteil dieser Ausgestaltungsform ist der geringe beanspruchte Bauraum, da außerhalb des Achsgehäuses der zweiten Achse kein Bauraum zur Anordnung für den Hydraulikmotor 22 benötigt wird.

Die hydraulische Maschine 22 steht ebenfalls über eine Hydraulikleitung 24 in Fluidkommunikation mit der hydraulischen Maschine 8. Die hydraulischen Maschinen 8, 21 und 22 sind in einen geschlossenen hydrostatischen Kreislauf integriert und bilden somit einen hydrostatischen Antrieb aus. Die hydraulischen Maschinen 8, 21 und 22 können sowohl als Hydraulikpumpe als auch als Hydraulikmotor betrieben werden. Die hydraulischen Maschinen 8, 21 und 22 können als hydrostatische Radialkolbenmaschinen ausgebildet sein. Auch eine Ausführung als Axialkolbeneinheit ist möglich. Wenn die erste hydraulische Maschine 8 als Hydropumpe betrieben wird, werden die zweiten hydraulischen Maschinen 21, 22 als Hydromotor betrieben und umgekehrt. Zum Antrieb der Achsen 11,13 arbeitet die hydraulische Maschine 8 als Hydraulikpumpe und die hydraulischen Maschinen 21, 22 als Hydraulikmotoren, die jeweils die von der Hydraulikpumpe 8 erzeugte hydraulische Leistung in mechanische Leistung zum Antrieb der Achsen 11,13 umwandeln. Zum Abbremsen der Achsen 11, 13 ist es umgekehrt.

Durch ein Steuerventil 25 können wahlweise die zwei Radmotoren 21 und/oder der Hydromotor 22 zugeschaltet werden. Außerdem kann eine Speisepumpe (nicht gezeigt) im hydrostatischen Kreislauf angeordnet sein, um auftretende interne und externe Leckagemengen zu kompensieren.

Gemäß einer weiteren, nicht gezeigten Variante der Figur 2 ist die hydraulische Maschine 22 an der zweiten Hinterachse 13 durch zwei hydraulische Maschinen ersetzt, die koaxial und ohne Differential in Antriebsverbindung mit der Hinterachse 13 stehen. So können ohne Achsdifferential radindividuelle Drehmomente aufgebracht werden, bzw. ohne Achsdifferential kann ein Durchdrehen der Räder 14 verhindert oder ein sog. Torque Vectoring dargestellt werden.

Mit dieser elektrohydraulischen Hybridantriebsvorrichtung 20 sind nun verschiedene Fahrbetriebsmodi des Kraftfahrzeugs realisierbar. Die einzelnen Komponenten der elektrohydraulischen Hybridantriebsvorrichtung werden hierzu von der Steuereinrichtung 7 zweckmäßig angesteuert, so dass bedarfsgerecht neben oder anstatt der mechanisch angetriebenen Triebachse 12 weitere Achsen über hydraulische Radnaben- bzw. Achsmotoren angetrieben werden können.

Bei Bedarf können auf diese Weise neben einem rein verbrennungsmotorischen Antrieb mehrere weitere Antriebsoptionen realisiert werden. Z. B. können die einzelnen hydraulischen Achsen 11, 13 zusätzlich zur rein verbrennungsmotorisch angetriebenen Achse 12 angetrieben werden, z. B. zum Anfahren auf kritischem Untergrund, bei Steigungen etc. Dies wird auch als sog. hydraulischer Boost-Betrieb bezeichnet. Dabei wird die Kupplung 4 geschlossen.

Dagegen kann beim Bremsen bei geöffneter Kupplung 4 kinetische Energie rekuperiert werden, indem die Hydraulikmotoren 21, 22 an den Achsen 11, 13 als hydraulische Pumpe wirken, die die an der ersten elektrischen Maschine 5 angeflanschte hydraulische Maschine 8 als Hydraulikmotor antreiben. Der Hydraulikmotor 5 erzeugt entsprechend einen generatorischen Betrieb der elektrischen Maschine 5. Damit wird der elektrische Energiespeicher 6 aufgeladen. Falls der elektrische Energiespeicher 6 voll ist oder zusätzliche Bremswirkung benötigt wird, kann die Kupplung 4 geschlossen werden und somit die Motorbremswirkung ausgenutzt werden. Auf diese Weise kann ein Motorbremsbetrieb realisiert werden. Vorteilhaft sind bei den Hydraulikmotoren 21 in den Vorderradnaben im Hinblick auf die Leistungsdichte der geringe benötigte Bauraum und die damit verbundenen konstruktiven Vorteile.

Für Anfahr- oder Rangiervorgänge bzw. für eine der Speicherkapazität des elektrischen Energiespeichers 6 entsprechende Wegstrecke kann ohne Brennkraftmaschine 1 gefahren werden, indem bei geöffneter Kupplung 4 die erste elektrische Maschine 5 die erste hydraulische Maschine 8 als Hydraulikpumpe antreibt und diese die Radnabenmotoren 21 und/oder die den hydraulischen Motor 22 antreibt. Die mechanisch angetriebene Triebachse 12 läuft in diesem Fall passiv mit. Auf diese Weise ist auch die Realisierung einer Kriechgangfunktion (Crawler) möglich.

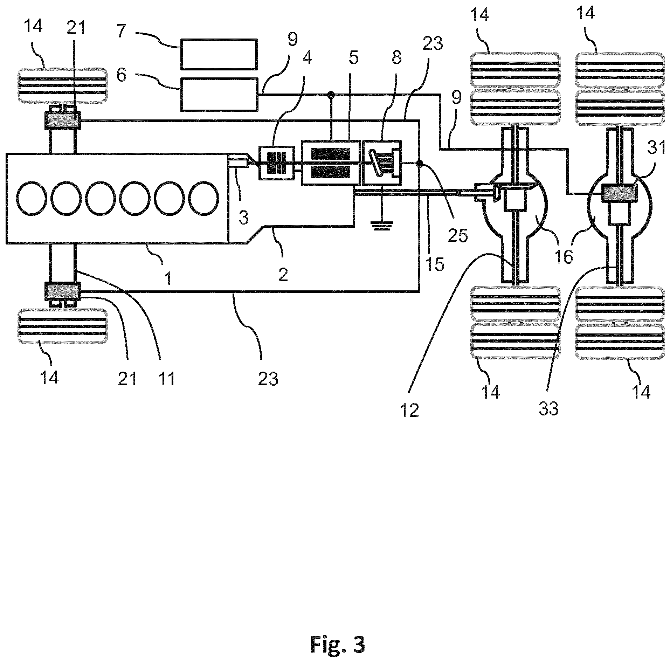

Figur 3 zeigt eine schematische Darstellung eines weiteren Ausführungsbeispiels einer elektrohydraulischen Hybridantriebsvorrichtung 30. Die Besonderheit dieses Ausführungsbeispiels liegt darin, dass an der zweiten Hinterachse 33 nun eine elektrische Maschine 31 (zweite elektrische Maschine 31) integriert ist. Diese wird über eine entsprechende Leistungselektronik an den Energiespeicher 6 angeschlossen und erlaubt ebenfalls bei Bedarf neben einem rein verbrennungsmotorischen Antrieb mehrere weitere Antriebsoptionen. Das Fahrzeug kann somit ferner mittels einer elektrisch angetriebenen Achse 33 angetrieben werden. Der elektrische Achsantrieb kann alternativ oder zusätzlich zu dem rein verbrennungsmotorischen Antrieb der Achse 12 oder dem hydraulischen Antrieb der Achse 11 eingesetzt werden.

Bei einem sog. elektrischen Boost-Betrieb stellt die zweite elektrische Maschine 31 beispielsweise zusätzlich zur Brennkraftmaschine 1 ein zusätzliches Antriebsmoment bereit. Ferner erlaubt die zweite elektrische Maschine 31 einen Rekuperationsbetrieb, bei dem kinetische Energie des Kraftfahrzeugs durch einen generatorischen Betrieb der zweiten elektrischen Maschine 31 in elektrische Energie umgewandelt wird. Ferner erlaubt die zweite elektrische Maschine 31 ein rein elektrisches Anfahren bzw. Fahren. Hierbei wird die Kupplung 4 geöffnet, sodass die hydraulische Maschine 6 und die erste elektrische Maschine 5 nicht laufen. Stattdessen wird mittels der vom elektrischen Energiespeicher 6 bereitgestellten elektrischen Energie direkt die zweite elektrische Maschine 31 der zweiten Hinterachse 33 motorisch angetrieben.

Weiterhin ist es mit dieser Antriebsstrangkonfiguration 30 auch möglich, die erste elektrische Maschine 5 an der ersten hydraulischen Maschine 8 als Motor zu betreiben und aus dem Energiespeicher 6 zu speisen. Auf diese Weise kann statt der zweiten Triebachse 33 die Vorderachse 11 über die Radnabenmotoren 21 angetrieben werden. Zusätzlich können auch beide Achsen 11, 33, d. h. die vordere hydraulisch angetriebene und die hintere elektrisch angetriebene, angetrieben werden.

Gemäß einer weiteren, nicht gezeigten Variante der Figur 3 ist die zweite elektrische Maschine 31 an der zweiten Hinterachse 33 durch zwei elektrische Maschinen ersetzt, die koaxial und ohne Differential in Antriebsverbindung mit der Hinterachse 33 stehen. So können ohne Achsdifferential radindividuelle Drehmomente aufgebracht werden, bzw. ohne Achsdifferential kann ein Durchdrehen der Räder 14 verhindert oder ein sog. Torque Vectoring dargestellt werden.

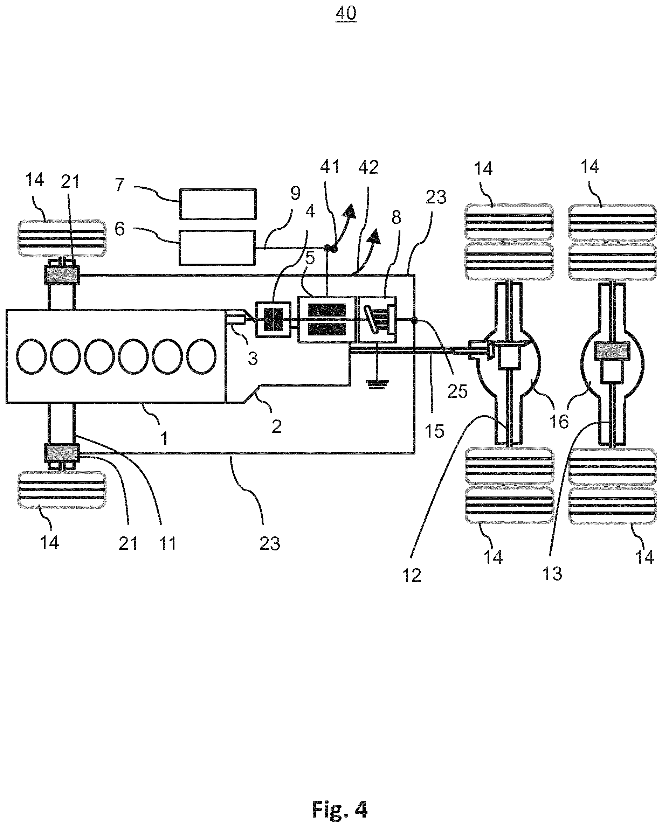

Figur 4 zeigt eine schematische Darstellung einer weiteren Ausführungsform der elektrohydraulischen Hybridantriebsvorrichtung 40. Hierbei kann die Vorderachse 11 bei Bedarf wiederum hydraulisch durch zwei Radnabenmotoren 21 angetrieben werden, die über Hybridleitungen 23 bzw. einen hydrostatischen Fluidkreislauf mit der ersten hydraulischen Maschine 8 verbunden sind. Gemäß dieser Ausführungsvariante ist die zweite Hinterachse 13 nicht angetrieben. Es könnte aber eine angetriebene zweite Hinterachse, wie in den Figuren 2 und 4 beschrieben, vorgesehen sein.

Weiterhin ist die Nutzung der ersten hydraulischen Maschine 8 und der ersten elektrischen Maschine 5 als Antrieb für jegliche Aufbausysteme wie z.B. Kippeinrichtungen, Betonmischtrommeln, die bisher über den Nebenantrieb mit Energie versorgt wurden, möglich. So weist die elektrohydraulische Hybridantriebsvorrichtung 40 einen elektrischen Nebenabtrieb 41 auf, der lediglich schematisch illustriert ist. Der elektrische Nebenabtrieb 41 dient zum Betrieb und/oder zur Stromversorgung von elektrisch angetriebenen Aufbauten oder Nebenaggregaten (nicht dargestellt) des Kraftfahrzeugs. Der elektrische Nebenabtrieb 41 kann wahlweise, z. B. je nach Schaltstellung der Kupplung 4, lediglich über den elektrischen Energiespeicher 6 und/oder über die erste elektrische Maschine 5, angetrieben von der Brennkraftmaschine 1, mit elektrischer Energie versorgt werden.

Ferner weist die elektrohydraulische Hybridantriebsvorrichtung 40 einen hydraulischen Nebenabtrieb 42 auf, der ebenfalls lediglich schematisch illustriert ist. Der hydraulische Nebenabtrieb 42 dient zum Betrieb und/oder zur Druckölversorgung von hydraulischen Aufbauten oder hydraulischen Nebenaggregaten (nicht gezeigt) des Kraftfahrzeugs. Der hydraulische Nebenabtrieb 42 steht in Antriebsverbindung mit der ersten hydraulischen Maschine 8 und kann von dieser mit hydraulischer Leistung versorgt werden.

In Abhängigkeit von der Energiespeicherkapazität des elektrischen Energiespeichers 6 können somit elektrisch oder hydraulisch arbeitende Aufbausysteme und/oder Nebenaggregate über eine definierte Zeit betrieben werden, ohne dass die Brennkraftmaschine 1 aktiv ist.

Dadurch kann beispielsweise ein Stopp-Start-Betrieb im Straßenverkehr ermöglicht werden, bei dem durch den Betrieb der hydraulischen Maschine 8 ohne die Brennkraftmaschine 1 z.B. eine Betonmischtrommel bei Wartezeiten (Stopp-Phasen) angetrieben werden kann. Dadurch können sowohl der Kraftstoffverbrauch als auch Schadstoffemissionen reduziert werden.

Bei allen vorgenannten Ausführungsvarianten ist es zum besseren Management der Ladung des elektrischen Energiespeichers 6 möglich, GPS- bzw. Navigationsdaten zu verwenden, so dass vorausliegende Steigungen oder Gefälle bei der Regelung des Ladezustandes des Energiespeichers berücksichtigt werden können. Das Prinzip ist von den bereits erhältlichen GPS-Tempomaten bekannt. Für Offroad-Anwendungen, bei denen keine digitalen Kartendaten vorliegen, können aus anderen Sensordaten, hier insbesondere Kameradaten, Auswertungen der allerdings nur unmittelbar vorausliegenden Steigungs- oder Gefällestrecken erfolgen.

### Bezugszeichenliste

- 1: Brennkraftmaschine
- 2: Getriebe
- 3: Nebenabtrieb
- 4: Schaltbare Kupplung
- 5: Elektrische Maschine
- 6: Elektrische Energiespeicher
- 7: Steuereinrichtung
- 8: Hydraulische Maschine
- 9: Stromleitung
- 10, 20, 30, 40: Elektrohydraulische Hybridantriebsvorrichtung
- 11: Vorderachse
- 12: Erste Hinterachse
- 12a: Achsdifferential
- 13: Zweite Hinterachse
- 14: Rad
- 15: Abtriebswelle
- 16: Achsdifferentialgehäuse
- 21: Hydraulische Maschine, Radnabenmotor
- 22: Hydraulische Maschine
- 23: Hydraulikleitung
- 24: Hydraulikleitung
- 25: Steuerventil
- 31: Elektrische Maschine
- 33: Zweite Hinterachse

## Patentansprüche

1. Elektrohydraulische Hybridantriebsvorrichtung (10; 20; 30; 40) für ein Kraftfahrzeug, insbesondere für ein Nutzfahrzeug, umfassend
eine Brennkraftmaschine (1);
eine generatorisch und motorisch betreibbare erste elektrische Maschine (5), die über einen Nebenabtrieb (3) von der Brennkraftmaschine (1) antreibbar ist;
eine erste hydraulische Maschine (8), die in Antriebsverbindung mit der ersten elektrischen Maschine (5) steht;
mindestens eine zweite hydraulische Maschine (21, 22), die mit der ersten hydraulischen Maschine (5) in Fluidkommunikation steht und antriebstechnisch verbunden ist, wobei die hydraulischen Maschinen (5, 21, 22) sowohl als Hydraulikpumpen als auch als Hydraulikmotoren betreibbar sind;
eine erste angetriebene Achse (12) des Kraftfahrzeugs, die über eine von der Brennkraftmaschine (1) angetriebene getriebeausgangsseitige Abtriebswelle (15) antreibbar ist, **dadurch gekennzeichnet,**
**dass** die Hybridantriebsvorrichtung (10, 20, 30, 40)
mindestens eine zweite angetriebene Achse (11, 13) des Kraftfahrzeugs, die von der mindestens einen zweiten hydraulischen Maschine (21, 22) antreibbar ist, und
mindestens eine generatorisch und motorisch betreibbare zweite elektrische Maschine (31), die an einer dritten angetriebenen Achse (33) des Nutzfahrzeugs angeordnet ist und in Antriebsverbindung mit der dritten Achse (33) steht, umfasst.

2. Elektrohydraulische Hybridantriebsvorrichtung nach Anspruch 1, wobei die mindestens eine zweite angetriebene Achse eine Vorderachse (11) und/oder eine zweite Hinterachse (13) des Nutzfahrzeugs umfasst.

3. Elektrohydraulische Hybridantriebsvorrichtung nach Anspruch 2, wobei die mindestens eine zweite hydraulische Maschine
a) zwei hydraulische Radnabenmaschinen (21) aufweist, die zum Antrieb der zweiten angetriebenen Achse (11) vorgesehen sind; oder
b) eine hydraulische Maschine (22) umfasst, deren Antriebswelle mit einem Achsdifferential der zweiten angetriebenen Achse (13) wirkverbunden ist; oder
c) zwei hydraulische Maschinen umfasst und die zweite angetriebene Achse zwei koaxial angeordnete Radantriebswellen aufweist, die jeweils radseitig mit einem Rad drehfest verbunden sind und andernends mit einer der beiden hydraulischen Motoren wirkverbunden sind.

4. Elektrohydraulische Hybridantriebsvorrichtung (40) nach einem der vorhergehenden Ansprüche, umfassend einen hydraulischen Nebenabtrieb (42) zum Betrieb und/oder zur Druckölversorgung von hydraulischen Aufbauten oder hydraulischen Nebenaggregaten des Kraftfahrzeugs, der in hydraulischer Antriebsverbindung mit der ersten hydraulischen Maschine (8) steht.

5. Elektrohydraulische Hybridantriebsvorrichtung (30) nach einem der vorhergehenden Ansprüche, wobei die zweite angetriebene Achse eine Vorderachse (11) und die dritte angetriebene Achse eine zweite Hinterachse (33) des Nutzfahrzeugs ist.

6. Elektrohydraulische Hybridantriebsvorrichtung nach einem der vorhergehenden Ansprüche ,
a) wobei eine Antriebswelle der zweiten elektrischen Maschine (31) mit einem Achsdifferential der dritten angetriebenen Achse (13) wirkverbunden ist oder
b) wobei zwei zweite elektrische Maschinen vorgesehen sind, wobei die dritte angetriebene Achse zwei koaxial angeordnete Radantriebswellen aufweist, die jeweils radseitig mit einem Rad drehfest verbunden sind und andernends mit einem der beiden zweiten elektrischen Maschinen wirkverbunden sind.

7. Elektrohydraulische Hybridantriebsvorrichtung (40) nach Anspruch 5 oder 6, umfassend einen elektrischen Nebenabtrieb (41) zum Betrieb und/oder zur Stromversorgung von elektrisch angetriebenen Aufbauten oder Nebenaggregaten des Kraftfahrzeugs, der über einen elektrischen Energiespeicher (6) zur Versorgung der ersten elektrischen Maschine (5) mit elektrischer Energie versorgbar ist.

8. Elektrohydraulische Hybridantriebsvorrichtung nach einem der vorhergehenden Ansprüche, umfassend eine schaltbare Kupplungseinrichtung (4), mittels derer die erste elektrische Maschine (5) mit dem Nebenabtrieb (3) verbindbar ist; und/oder einen elektrischen Energiespeicher (6), über den die erste elektrische Maschine (5) mit elektrischer Energie versorgbar ist.

9. Elektrohydraulische Hybridantriebsvorrichtung nach Anspruch 8, umfassend eine Steuereinrichtung (7) zur Ansteuerung der schaltbaren Kupplungseinrichtung (4), der Brennkraftmaschine (1), der ersten elektrischen Maschine (5) und der hydraulischen Maschinen (8, 21, 22), wobei die Steuereinrichtung (7) ausgebildet ist, das Kraftfahrzeug wahlweise in zumindest zwei der folgenden Betriebsmodi zu betreiben:
- einem ersten Betriebsmodus, bei dem das Kraftfahrzeug rein verbrennungsmotorischen angetrieben wird,
- einem zweiten Betriebsmodus, bei dem nur die mindestens eine zweite hydraulisch angetriebene Achse angetrieben wird,
- einem dritten Betriebsmodus, bei dem nur die dritte angetriebene Achse durch die mindestens eine zweite elektrische Maschine angetrieben wird;
- einem vierten Betriebsmodus, bei dem nur die mindestens eine zweite hydraulisch angetriebene Achse hydraulisch angetrieben wird und die dritte angetriebene Achse durch die mindestens eine zweite elektrische Maschine elektrisch angetrieben wird:
- einem fünften Betriebsmodus, bei dem
a) die erste Achse mechanisch von der Brennkraftmaschine angetrieben wird, und
b1) die mindestens eine zweite Achse hydraulisch von der mindestens einen zweiten hydraulischen Maschine angetrieben wird und/oder
b2) die dritte Achse elektrisch von der mindestens einen zweiten elektrischen Maschine angetrieben wird;
- einem sechsten Betriebsmodus, bei dem die Steuereinrichtung ausgebildet ist, in einem rekuperativen Bremsbetrieb die erste Hydraulikmaschine als Hydraulikmotor und die mindestens eine zweite Hydraulikmaschine als Hydraulikpumpe zu betreiben, so dass die erste elektrische Maschine generatorisch von der ersten Hydraulikmaschine angetrieben wird, wobei die Steuereinrichtung ausgebildet ist, die Kupplungseinrichtung zu öffnen und die im rekuperativen Bremsbetrieb erzeugte elektrische Energie in dem elektrischen Energiespeicher zu speichern;
- einem siebten Betriebsmodus, bei dem die Steuereinrichtung ausgebildet ist, in einem rekuperativen Bremsbetrieb die erste Hydraulikmaschine als Hydraulikmotor und die mindestens eine zweite Hydraulikmaschine als Hydraulikpumpe zu betreiben, so dass die erste elektrische Maschine generatorisch von der ersten Hydraulikmaschine angetrieben wird, wobei die Steuereinrichtung ausgebildet ist, die Kupplungseinrichtung zu schließen und die im rekuperativen Bremsbetrieb erzeugte elektrische Energie zum Schleppen der Brennkraftmaschine zu nutzen.

10. Elektrohydraulische Hybridantriebsvorrichtung nach Anspruch 9, wobei die Steuereinrichtung (7) ausgebildet ist, für einen Anfahrvorgang, Rangiervorgang, Stopp-Start-Betrieb und/oder Kriechgangfunktion des Kraftfahrzeugs das Kraftfahrzeug in dem zweiten, dritten oder vierten Betriebsmodus zu betreiben.

11. Elektrohydraulische Hybridantriebsvorrichtung nach Anspruch 9 oder 10, wobei die Steuereinrichtung (7) ausgebildet ist, im zweiten Betriebsmodus die Kupplungseinrichtung (4) zu öffnen und das Kraftfahrzeug ohne Brennkraftmaschine anzutreiben, wobei die erste elektrische Maschine (5) mittels Energie aus dem elektrischen Energiespeicher (6) die erste hydraulische Maschine (8) als Hydraulikpumpe antreibt und die Hydraulikpumpe die mindestens eine zweite hydraulische Maschine als Hydromotor antreibt.

12. Kraftfahrzeug, insbesondere Nutzfahrzeug, mit einer elektrohydraulischen Hybridantriebsvorrichtung (10; 20, 30; 40) nach einem der vorhergehenden Ansprüche.

## Claims

1. An electrohydraulic hybrid drive device (10; 20; 30; 40) for a motor vehicle, in particular for a commercial vehicle, comprising
an internal combustion engine (1);
a generator- and motor-operable first electric machine (5) which can be driven via a power take-off (3) by the internal combustion engine (1);
a first hydraulic machine (8) which is drive-connected to the first electric machine (5); and at least one second hydraulic machine (21, 22) which is in fluid communication with and connected in terms of drive to the first hydraulic machine (5), wherein the hydraulic machines (5, 21, 22) can be operated both as hydraulic pumps and also as hydraulic motors;
a first driven axle (12) of the motor vehicle which can be driven via an output shaft (15), which output shaft is driven by the internal combustion engine (1) and is on the transmission output side, **characterized**
**in that** the hybrid drive device (10, 20, 30, 40) comprises
at least one second driven axle (11, 13) of the motor vehicle, which can be driven by the at least one second hydraulic machine (21, 22), and
at least one generator- and motor-operable second electric machine (31) which is arranged on a third driven axle (33) of the commercial vehicle and is drive-connected to the third axle (33).

2. The electrohydraulic hybrid drive device according to Claim 1, wherein the at least one second driven axle comprises a front axle (11) and/or a second rear axle (13) of the commercial vehicle.

3. The electrohydraulic hybrid drive device according to Claim 2, wherein the at least one second hydraulic machine
a) has two hydraulic wheel hub machines (21) which are provided to drive the second driven axle (11); or
b) comprises a hydraulic machine (22), the drive shaft of which is operatively connected to an axle differential of the second driven axle (13); or
c) comprises two hydraulic machines and the second driven axle has two coaxially arranged wheel drive shafts which are connected in each case on the wheel side in a rotationally conjoint manner to a wheel and at the other end are operatively connected to one of the two hydraulic motors.

4. The electrohydraulic hybrid drive device (40) according to any one of the preceding claims, comprising a hydraulic power take-off (42) for the operation of and/or for the supply of pressure oil to hydraulic assemblies or hydraulic ancillary units of the motor vehicle which is hydraulically drive-connected to the first hydraulic machine (8).

5. The electrohydraulic hybrid drive device (30) according to any one of the preceding claims, wherein the second driven axle is a front axle (11) and the third driven axle is a second rear axle (33) of the commercial vehicle.

6. The electrohydraulic hybrid drive device according to any one of the preceding claims,
a) wherein a drive shaft of the second electric machine (31) is operatively connected to an axle differential of the third driven axle (13) or
b) wherein two second electric machines are provided, wherein the third driven axle has two coaxially arranged wheel drive shafts which are connected in each case on the wheel side in a rotationally conjoint manner to a wheel and at the other end are operatively connected to one of the two second electric machines.

7. The electrohydraulic hybrid drive device (40) according to Claim 5 or 6, comprising an electric power take-off (41) for the operation of and/or for the supply of power to electrically driven assemblies or ancillary units of the motor vehicle, which electric power take-off can be supplied with electrical energy via an electrical energy store (6) for supply of the first electric machine (5).

8. The electrohydraulic hybrid drive device according to any one of the preceding claims, comprising a shiftable coupling device (4), by means of which the first electric machine (5) can be connected to the power take-off (3); and/or an electrical energy store (6) via which the first electric machine (5) can be supplied with electrical energy.

9. The electrohydraulic hybrid drive device according to Claim 8, comprising a control device (7) for actuation of the shiftable coupling device (4), the internal combustion engine (1), the first electric machine (5) and the hydraulic machines (8, 21, 22), wherein the control device (7) is formed to operate the motor vehicle optionally in at least two of the following modes of operation:
- a first mode of operation in the case of which the motor vehicle is driven purely by the internal combustion engine,
- a second mode of operation in the case of which only the at least one second hydraulically driven axle is driven,
- a third mode of operation in the case of which only the third driven axle is driven by the at least one second electric machine;
- a fourth mode of operation in the case of which only the at least one second hydraulically driven axle is hydraulically driven and the third driven axle is driven electrically by the at least one second electric machine;
- a fifth mode of operation in the case of which
a) the first axle is driven mechanically by the internal combustion engine, and
b1) the at least one second axle is driven hydraulically by the at least one second hydraulic machine and/or
b2) the third axle is driven electrically by the at least one second electric machine;
- a sixth mode of operation in the case of which the control device is formed to operate the first hydraulic machine as a hydraulic motor in a recuperative braking mode and the at least one second hydraulic machine as a hydraulic pump so that the first electric machine is driven as a generator by the first hydraulic machine, wherein the control device is formed to open the coupling device and store the electrical energy generated in the recuperative braking mode in the electrical energy store;
- a seventh mode of operation in the case of which the control device is formed to operate the first hydraulic machine as a hydraulic motor in a recuperative braking mode and the at least one second hydraulic machine as a hydraulic pump so that the first electric machine is driven as a generator by the first hydraulic machine, wherein the control device is formed to close the coupling device and use the electrical energy generated in the recuperative braking mode to crank the internal combustion engine.

10. The electrohydraulic hybrid drive device according to Claim 9, wherein the control device (7) is formed to operate the vehicle in the second, third or fourth mode of operation for a starting process, manoeuvring process, start/stop mode and/or crawling speed function of the motor vehicle.

11. The electrohydraulic hybrid drive device according to Claim 9 or 10, wherein the control device (7) is formed to, in the second operating mode, open the coupling device (4) and drive the motor vehicle without an internal combustion engine, wherein the first electric machine (5) drives the first hydraulic machine (8) as a hydraulic pump by means of energy from the electrical energy store (6) and the hydraulic pump drives the at least one second hydraulic machine as a hydraulic motor.

12. A motor vehicle, in particular commercial vehicle, having an electrohydraulic hybrid drive device (10; 20, 30; 40) according to any one of the preceding claims.

## Revendications

1. Dispositif d'entraînement hybride électrohydraulique (10 ; 20 ; 30 ; 40) pour un véhicule automobile, en particulier pour un véhicule utilitaire, comprenant
un moteur à combustion interne (1) ;
une première machine électrique (5) pouvant fonctionner en mode générateur et en mode moteur et qui peut être entraînée par le moteur à combustion interne (1) par l'intermédiaire d'une prise de force (3) ;
une première machine hydraulique (8) qui est en liaison d'entraînement avec la première machine électrique (5) ;
au moins une deuxième machine hydraulique (21, 22) qui est en communication fluidique avec et reliée en entraînement à la première machine hydraulique (5), les machines hydrauliques (5, 21, 22) pouvant fonctionner aussi bien comme des pompes hydrauliques que comme des moteurs hydrauliques ;
un premier essieu entraîné (12) du véhicule automobile qui peut être entraîné par l'intermédiaire d'un arbre de sortie (15) côté sortie de transmission, entraîné par le moteur à combustion interne (1),
**caractérisé en ce que** le dispositif d'entraînement hybride (10, 20, 30, 40) comprend
au moins un deuxième essieu entraîné (11, 13) du véhicule automobile qui peut être entraîné par ladite au moins une deuxième machine hydraulique (21, 22), et
au moins une deuxième machine électrique (31) pouvant fonctionner en mode générateur et en mode moteur, qui est disposée sur un troisième essieu entraîné (33) du véhicule utilitaire et se trouve en liaison d'entraînement avec le troisième essieu (33).

2. Dispositif d'entraînement hybride électrohydraulique selon la revendication 1, dans lequel ledit au moins un deuxième essieu entraîné comprend un essieu avant (11) et/ou un deuxième essieu arrière (13) du véhicule utilitaire.

3. Dispositif d'entraînement hybride électrohydraulique selon la revendication 2, dans lequel ladite au moins une deuxième machine hydraulique
a) présente deux machines sur moyeu de roue hydrauliques (21) qui sont prévues pour entraîner le deuxième essieu entraîné (11) ; ou
b) comprend une machine hydraulique (22) dont l'arbre d'entraînement est en relation active avec un différentiel d'essieu du deuxième essieu entraîné (13) ; ou
c) comprend deux machines hydrauliques et le deuxième essieu entraîné présente deux arbres d'entraînement de roue disposés coaxialement qui sont respectivement côté roue reliés de manière verrouillée en rotation à une roue et sont à l'autre extrémité en relation active avec l'un des deux moteurs hydrauliques.

4. Dispositif d'entraînement hybride électrohydraulique (40) selon l'une quelconque des revendications précédentes, comprenant une prise de force hydraulique (42) pour le fonctionnement et/ou pour l'alimentation en huile sous pression de superstructures hydrauliques ou de groupes hydrauliques auxiliaires du véhicule automobile qui est en liaison d'entraînement hydraulique avec la première machine hydraulique (8).

5. Dispositif d'entraînement hybride électrohydraulique (30) selon l'une quelconque des revendications précédentes, dans lequel le deuxième essieu entraîné est un essieu avant (11) et le troisième essieu entraîné est un deuxième essieu arrière (33) du véhicule utilitaire.

6. Dispositif d'entraînement hybride électrohydraulique selon l'une quelconque des revendications précédentes,
a) un arbre d'entraînement de la deuxième machine électrique (31) étant en relation active avec un différentiel d'essieu du troisième essieu entraîné (13), ou
b) deux deuxièmes machines électriques étant prévues, le troisième essieu entraîné présentant deux arbres d'entraînement de roue disposés coaxialement qui sont respectivement côté roue reliés de manière verrouillée en rotation à une roue à l'une des deux machines électriques.

7. Dispositif d'entraînement hybride électrohydraulique (40) selon la revendication 5 ou 6, comprenant une prise de force électrique (41) pour le fonctionnement et/ou pour l'alimentation électrique de superstructures à commande électrique ou de groupes auxiliaires du véhicule automobile qui peut être alimentée en énergie électrique par l'intermédiaire d'un accumulateur d'énergie électrique (6) pour l'alimentation de la première machine électrique (5).

8. Dispositif d'entraînement hybride électrohydraulique selon l'une quelconque des revendications précédentes, comprenant un dispositif d'accouplement commutable (4) qui permet de relier la première machine électrique (5) à la prise de force (3) ; et/ou un accumulateur d'énergie électrique (6) par l'intermédiaire duquel la première machine électrique (5) peut être alimentée en énergie électrique.

9. Dispositif d'entraînement hybride électrohydraulique selon la revendication 8, comprenant un dispositif de commande (7) pour piloter le dispositif d'accouplement commutable (4), le moteur à combustion interne (1), la première machine électrique (5) et les machines hydrauliques (8, 21, 22), le dispositif de commande (7) étant réalisé pour faire fonctionner le véhicule automobile au choix dans au moins deux des modes de fonctionnement suivants :
- un premier mode de fonctionnement dans lequel le véhicule automobile est entraîné uniquement en mode moteur à combustion interne,
- un deuxième mode de fonctionnement dans lequel seul ledit au moins un deuxième essieu à entraînement hydraulique est entraîné,
- un troisième mode de fonctionnement dans lequel seul le troisième essieu entraîné est entraîné par ladite au moins une deuxième machine électrique ;
- un quatrième mode de fonctionnement dans lequel seul ledit au moins un deuxième essieu à entraînement hydraulique est entraîné et le troisième essieu entraîné est entraîné électriquement par ladite au moins une deuxième machine électrique ;
- un cinquième mode de fonctionnement dans lequel
a) le premier essieu est entraîné mécaniquement par le moteur à combustion interne, et
b1) ledit au moins un deuxième essieu est entraîné hydrauliquement par ladite au moins une deuxième machine hydraulique, et/ou
b2) le troisième essieu est entraîné électriquement par ladite au moins une deuxième machine électrique ;
- un sixième mode de fonctionnement dans lequel le dispositif de commande est réalisé dans un mode freinage par récupération pour faire fonctionner la première machine hydraulique comme un moteur hydraulique et ladite au moins une deuxième machine hydraulique comme une pompe hydraulique de sorte que la première machine électrique est entraîné en mode générateur par la première machine hydraulique, le dispositif de commande étant réalisé pour ouvrir le dispositif d'accouplement et pour accumuler dans l'accumulateur d'énergie électrique l'énergie électrique produite en mode freinage par récupération ;
- un septième mode de fonctionnement dans lequel le dispositif de commande est réalisé dans un mode freinage par récupération pour faire fonctionner la première machine hydraulique comme un moteur hydraulique et ladite au moins une deuxième machine hydraulique comme une pompe hydraulique de sorte que la première machine électrique est entraînée en mode générateur par la première machine hydraulique, le dispositif de commande étant réalisé pour fermer le dispositif d'accouplement et pour exploiter l'énergie électrique produite dans le mode freinage par récupération pour la traction du moteur à combustion interne.

10. Dispositif d'entraînement hybride électrohydraulique selon la revendication 9, dans lequel le dispositif de commande (7) est réalisé pour faire fonctionner le véhicule automobile dans le deuxième, le troisième ou le quatrième mode de fonctionnement pour une opération de démarrage, une opération de manœuvre, un fonctionnement marche/arrêt et/ou une fonction de vitesse réduite du véhicule automobile.

11. Dispositif d'entraînement hybride électrohydraulique selon la revendication 9 ou 10, dans lequel le dispositif de commande (7) est réalisé dans le deuxième mode de fonctionnement pour ouvrir le dispositif d'accouplement (4) et pour faire fonctionner le véhicule automobile sans moteur à combustion interne, la première machine électrique (5) entraînant au moyen d'énergie provenant de l'accumulateur d'énergie électrique (6) la première machine hydraulique (8) comme une pompe hydraulique et la pompe hydraulique entraînant ladite au moins une deuxième machine hydraulique comme un moteur hydraulique.

12. Véhicule automobile, en particulier véhicule utilitaire, comprenant un dispositif d'entraînement hybride électrohydraulique (10 ; 20, 30 ; 40) selon l'une quelconque des revendications précédentes.
